# EUROPÄISCHE PATENTSCHRIFT

(11) **EP 0 799 756 B1**
(45) Veröffentlichungstag und Bekanntmachung des Hinweises auf die Patenterteilung: **12.07.2000**
(21) Anmeldenummer: 97102862.6
(22) Anmeldetag: 21.02.1997
(51) Int. Cl.: B62D 25/00

(54) **Karosseriekörper für ein Fahrzeug**
Superstructure for a vehicle
Carrosserie pour un véhicule

(30) Priorität: 06.04.1996 DE 19613839
(43) Veröffentlichungstag der Anmeldung: 08.10.1997
(73) Patentinhaber: Volkswagen Aktiengesellschaft, 38436 Wolfsburg (DE)
(72) Erfinder: Hillmann, Jürgen, Dr., 38518 Gifhorn (DE); Morsch, Klaus-Dieter, 38124 Braunschweig (DE)

(56) Entgegenhaltungen:
- DE-A- 4 104 256
- DE-A- 19 523 005
- US-A- 5 094 504

## Beschreibung

Die Erfindung betrifft einen Karosseriekörper für ein Fahrzeug gemäß dem Oberbegriff des Patentanspruchs 1.

Gattungsgemäße Karosseriekörper sind durch offenkundige Vorbenutzung in unterschiedlichen Ausführungsformen allgemein bekannt. Insbesondere im Bereich der selbsttragenden Karosserien werden vorwiegend aus durch Widerstandspunktschweißen miteinander verbundenen Blechsegmenten Unterzusammenbauten (Beispielsweise Seitenteile, Bodengruppe oder Dachteile) erzeugt, die anschließend ihrerseits zu dem vollständigen Karosseriekörper ebenfalls durch Widerstandspunktschweißung miteinander verbunden werden. Der besondere Vorteil dieser Art des Karosseriebaus ist darin zu sehen, daß gerade das Widerstandspunktschweißen besonders gut mechanisierbar ist und daher eine rationelle Massenfertigung von Karosseriekörpern erlaubt. Nachteilig ist jedoch, daß die miteinander zu verbindenden Profil- oder Wandelemente nur partiell miteinander verbunden sind und deshalb insbesondere der Torsionswiderstand einzelner Trägerelemente oder des gesamten Karosseriekörpers deutlich unter denjenigen Werten bleibt, die theoretisch möglich wären, wenn der Karosseriekörper oder die einzelnen Trägerelemente einstückig ausgebildet wären. Ein weiterer Nachteil ist darin zu sehen, daß für eine prozeßtechnisch sicher beherrschbare Widerstandspunktschweißung ein relativ breiter Befestigungsflansch vorgesehen werden muß. Damit wird aus Fertigungsgründen Material eingesetzt, das zur Stabilität der gesamten Karosserie an sich keine nennenswerte Beiträge liefert und damit das Gesamtgewicht unnötig erhöht.

Weitere im Kraftfahrzeugkarosseriebau übliche Verbindungstechniken sind die diversen Schutzgasschweißverfahren, Strahlschweißverfahren (Elektronenstrahl, Laser) sowie in relativ geringem Umfang auch Klebetechniken. Insbesondere Laserschweißverfahren gewinnen zunehmend im Karosseriebau an Bedeutung. So werden beispielsweise zur Gewichtsoptimierung der Gesamtkarosserie Platinen unterschiedlicher Dicke oder Materialgüte (sogenannte tailored blanks) durch Laserstrahlschweißen oder Quetschnahtschweißen zusammengesetzt (siehe hierzu beispielsweise die DE-41 042 56-A1, B23K 26/08; VDI-Berichte Nr. 1002, 1993, Seite 45 bis 51; Automobilindustrie 6/91 Seite 550; DE-Z: ADZ/MTZ-Sonderheft Fertigungstechnik 92 Seite 19; DE-Z: Blechrohreprofile 40; 1993; 4, Seite 304 bis 306). Dieser Einsatz des Laserstrahl- bzw. Quetschnahtschweißens bezieht sich auf eine beanspuchungsgerechte Auslegung der Blechdicke bzw. Blechgüte einzelner Wandelemente oder Trägerelemente.

Im Stand der Technik, von der die Lehre der Erfindung ausgeht (DE-A-195 23 005), ist ein Karosseriekörper für ein Fahrzeug bekannt, bei dem ein Dachteil und ein Seitenwandteil mittels eines gebündelten Strahles mit hoher Energiedichte, vzw. eines Laserstrahles miteinander verbunden werden. Für die Verspannung" der beiden Bauteile gegeneinander, ist eine Andruckrolle vorgesehen, mit deren Hilfe das Seitenwandteil an das Dachteil gepreßt bzw. angedrückt wird. Sowohl das Dachteil als auch das Seitenwandteil weisen entsprechende abgebogene Bereiche auf, so daß hierdurch Anlageflächen realisiert sind, die bei Einsatz der Andruckrolle gegenseitig zur Anlage kommen. Ist nun das Dachteil und das Seitenwandteil entsprechend miteinander "verspannt" und liegen die Anlageflächen des Dachteiles und des Seitenwandteiles entsprechend aufeinander, so wird mit Hilfe der Laserschweißtechnik eine Schmelzschweißnaht realisiert, so daß die beiden Bauteile im wesentlichen über eine linienförmige Fügestelle, nämlich die durch die Laserschweißtechnik hervorgerufene Schweißnaht, miteinander verbunden sind.

Weiterhin wird durch die DE-A-41 04 256 ein Verfahren zum Herstellen von durch Tiefziehen oder Pressen umgeformten Formkörpern, nämlich Karosserieteilen, offenbart, bei den zwei ebene Blechteile unterschiedlicher Dicke und/oder unterschiedlichen Blechmaterials mittels eines gebündelten Laserstrahles hoher Energiedichte zusammengeschweißt und dann als Einheit durch Tiefziehen oder Pressen geformt werden. Hierzu wird auf einem ersten ebenen Blechteil ein zweites damit zu verschweißendes flächenkleineres Blechteil aufeinanderliegend angeordnet, wobei diese aufeinanderliegenden Blechteile gleichzeitig entlang einer bestimmten Schnittkurve mit Hilfe eines Laserstrahles durchtrennt, nämlich geschnitten werden. Durch eine entsprechende Relativbewegung der beiden Blechteile nach Durchführung des Schnittes können die Teile so verschoben werden, daß die entsprechenden Schnittkanten optimal aufeinanderliegend zusammengefügt werden können, so daß diese dann mit Hilfe eines gebündelten Laserstrahles gut verschweißbar sind.

Weiterhin zeigt die US-PS 5,094,504 einen Karosseriekörper, bei dem unterschiedliche Fügetechniken offenbart werden, um geformte Blechsegmente zusammenzusetzen. Unter anderem werden hier Fügestellen im Bereich von Knoten oder Winkelprofilen realisiert, die im wesentlichen linien- oder flächenförmig ausgebildet sind, nämlich mit Hilfe eines thermischen Schweißverfahrens aneinander gefügt werden.

Schließlich ist aus dem Fachbuch "Laserschweißgerechtes Konstruieren" (DVS-Verlag, Düsseldorf) bekannt, eine Fügestelle mit Hilfe eines Laserstrahles zu realisieren, um eine Steifigkeitserhöhung in diesem Bereich insbesondere in einer Knotenecke, zu erzielen.

Allerdings ist der bekannte Karosseriekörper, von dem die Erfindung ausgeht (DE-A-195 23 005), noch nicht optimal ausgebildet. Die Praxis hat nämlich gezeigt, daß der Arbeitsaufwand für die Verbindung der beiden Bauteile sehr hoch ist. Dies resultiert daraus, daß bei Herstellung der linienförmigen Fügestelle die Andruckrolle über eine längere Strecke - möglichst gleichzeitig - zusammen mit dem Laserschweißkopf verschoben werden muß, damit der entsprechende Anpressdruck genau in dem Bereich realisiert ist, wo auch die Laserschweißnaht erzeugt werden soll. Hieraus resultiert für den Laserschweißkopf sowie für die Andruckrolle eine durchaus aufwendige, d.h. kostenintensive Steuerungstechnik, damit entsprechende linienförmig verlaufende Fügestellen über "längere Strecken" mit gleichmäßiger Qualität überhaupt erzeugt werden können. Weiterhin hat sich gezeigt, daß die Gesamtsteifigkeit des Karosseriekörpers im Bereich der linien- bzw. flächenförmig ausgebildeten Fügestellen, insbesondere dann, wenn diese durch Laserschweißung realisiert worden sind, noch nicht optimal ausgebildet ist, insbesondere bei mehrachsig wirkenden Beanspruchungen Verbesserungen wünschenswert sind.

Der Lehre der Erfindung liegt daher die Aufgabe zugrunde, ein Karosseriekörper der in Rede stehenden Art derart auszugestalten und weiterzubilden, daß der Arbeitsaufwand zur Herstellung der Fügestellen entsprechend verringert ist, insbesondere die linien- und/oder flächenförmigen Fügestellen kostengünstig realisierbar sind und deren Gesamtsteifigkeit erhöht ist.

Die zuvor aufgezeigte Aufgabe ist nun mit den Merkmalen des kennzeichnenden Teils des neuformulierten Patentanspruches 1 gelöst. Die Unteransprüche betreffen besonders zweckmäßige Weiterbildungen dieses Karosseriekörpers.

Durch die erfindungsgemäße Ausgestaltung des Karosseriekörpers werden die oben beschriebenen Nachteile vermieden. Einerseits ist nunmehr keine so aufwendige "Spanntechnik" bzw. auch keine aufwendige "Steuerungstechnik" mehr erforderlich, um die linien- bzw. flächenförmig ausgebildeten Fügestellen zu realisieren, da die beiden Bauteile auch miteinander verklebt werden, so daß vzw.auch die bisher im Stand der Technik verwendete Andruckrolle zumindest bei der Realisierung der Schweißnaht entfallen kann. Weiterhin hat die Praxis gezeigt, daß die Gesamtsteifigkeit zusätzlich erhöht werden kann, wenn die Fügestellen zusätzlich zum Schweißen noch durch die erwähnte Klebung erzeugt werden. Im Ergebnis wird durch die Kombination von Schweißung, insbesondere Laserschweißung, und Klebung eine linien- bzw. flächenförmig ausgebildete Fügestelle erzeugt, die sehr kostengünstig herstellbar ist, wobei die Gesamtsteifigkeit insbesondere gegenüber mehrachsig wirkenden Beanspruchungen sehr wirkungsvoll erhöht ist.

Ein vorteilhaftes Ausführungsbeispiel der Erfindung ist in der Zeichnung dargestellt. Es zeigt:
- Figur 1:: einen Karosseriekörper als Bestandteil eines Kraftfahrzeuges in einer perspektivischen Darstellung,
- Figur 2:: die Verteilung der Fügestellen am Beispiels eines Winkelprofils, das Bestandteil des Karosseriekörpers gemäß Figur 1 ist,
- Figur 3:: die Verteilung von Fügestellen an einem Profilknoten, der Bestandteil des Karosseriekörpers gemäß Figur 1 ist,
- Figur 4:: eine Ansicht gemäß Schnitt IV - IV in Figur 3,
- Figur 5:: den Karosseriekörper gemäß Figur 1 in einer Heckansicht.
Gleiche Bauteile weisen in allen Figuren die gleiche Bezifferung auf.

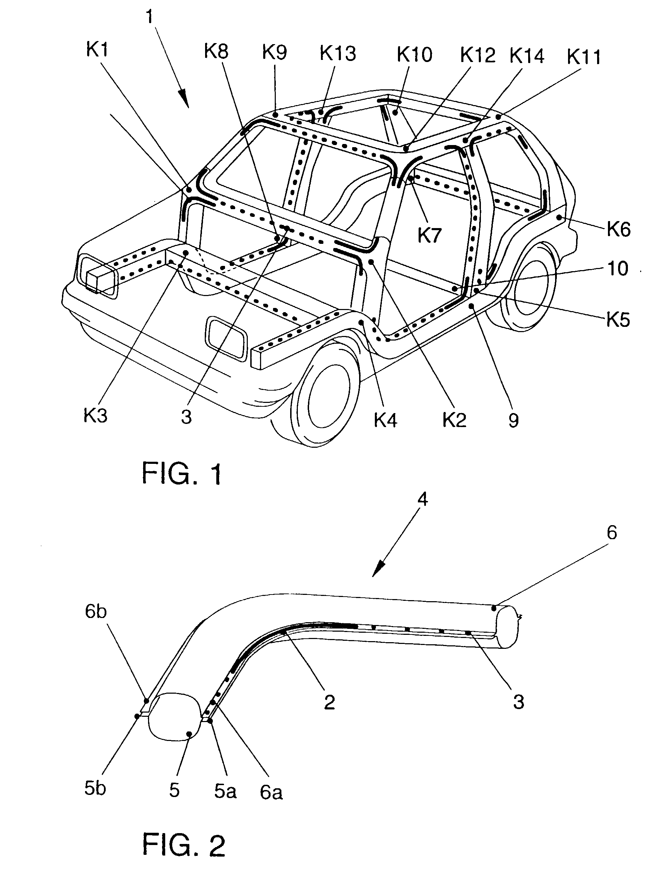

Bei dem in Figur 1 dargestellten Karosseriekörper 1 ist aus Gründen der Übersichtlichkeit auf die Bezifferung einzelner Wandelemente bzw. Blechfelder verzichtet worden. Das gleiche gilt für die verschiedenen Längs-, Quer- und Dachträger sowie für die vertikalen Säulen und verschiedenen Deckel (beispielsweise Türen, Heckklappe, Motorhaube). Die für die Erfindung wesentlichen Knoten oder Winkelprofile sind hier mit K1 bis K14 bezeichnet. Zur symbolischen Darstellung einer Laserschweißnaht oder eines Klebebereiches ist hier stellvertretend für alle anderen dicken Linien im Bereich des Knotens K1 eine winkelförmig verlaufende Linie mit 2 bezeichnet. Widerstandsschweißpunkte sind hier als dick gezeichnete Punkte angedeutet, von denen einer zwischen den Knoten K1 und K2 stellvertretend für alle anderen Punkte mit 3 bezeichnet ist. Die Darstellung in Figur 1 verdeutlicht, daß die linien- oder flächenförmig ausgebildeten Fügestellen 2 nur dort vorgesehen sind, wo sie einen wesentlichen Beitrag zur Erhöhung der Gesamtsteifigkeit, insbesondere im Hinblick auf die Torsionssteifigkeit, liefern können. Ausgewählte Bereiche sind also direkt dort, wo beispielsweise Trägerelemente aufeinander zu laufen und einen gemeinsamen Profilknoten bilden.

Die aus einzelnen Trägerelementen gebildeten und zur Aufnahme von Deckeln oder Blechfeldern (Seitenwand, Dachblech, Bodenblech, Kotflügel und dergleichen) hergerichteten Öffnungen weisen in der Regel eine polygonartig gestaltete Umfangslinie auf. Die linien- oder flächenförmigen Fügestellen 2 werden am Rand dieser Öffnungen bei dem erfindungsgemäß ausgeführten Karosseriekörper den Eckbereichen der jeweiligen Umfangslinie zugeordnet. Je nach Ausdehnung der Öffnung kann bereits eine Ausdehnung der linien- oder flächenförmigen Fügestellen 2 auf 10 % der gesamten Umfanglinie ausreichend sein, um eine spürbare Steifigkeit zur Erhöhung zu bewirken. Dieser Anteil kann bei kleineren Öffnungen auf bis zu 50 % wachsen. Allerdings ist deren absolute Länge dann auch nicht sehr viel größer als bei den relativ großen Öffnungen. Mit der Verteilung der unterschiedlichen Fügestellenarten 2, 3 wird also der Einsatz der sehr werkzeugintensiven Laserschweißtechnik auf ein Minimum begrenzt.

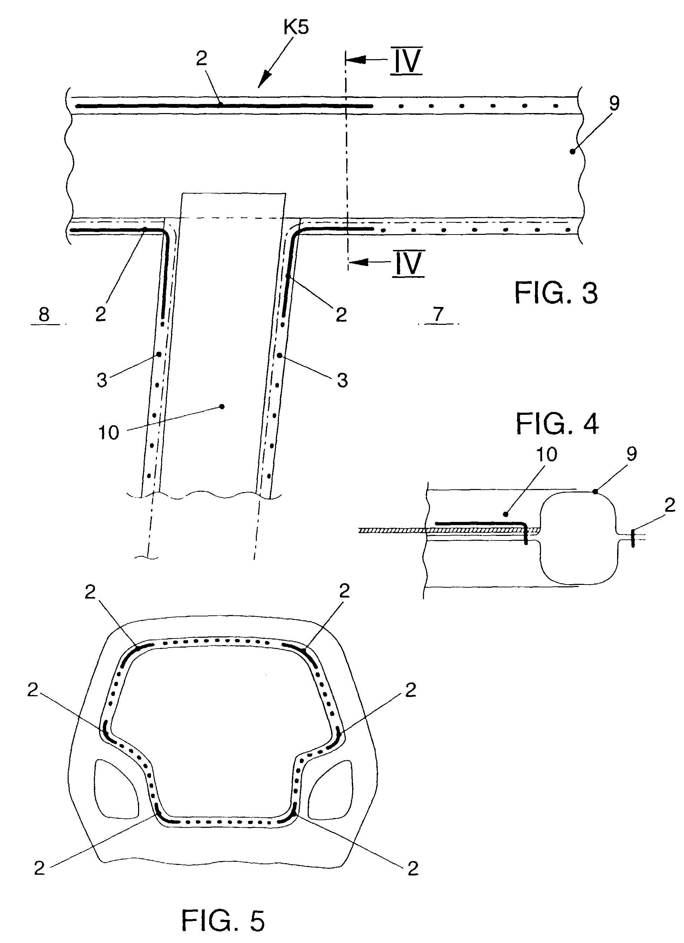

Figur 2 zeigt ein Winkelprofil 4, das im wesentlichen aus einer Innenschale 5 und einer Außenschale 6 zusammengesetzt ist. Ein derartiges Winkelprofil kann Bestandteil eines Türrahmens sein oder auch innerhalb des Karosseriekörpers 1 im Bereich von Tür- oder Fensterscheibenausschnitten. Beide Schalen 5, 6 weisen abgestellte Flansche 5a, 5b bzw. 6a, 6b auf, die hier aufeinander liegen und durch punktförmige Fügestellen 3 bzw. linienförmige Fügestellen 2 miteinander verbunden sind. Am Beispiel des Knotens K5 wird in Figur 3 gezeigt, wie auch die Verbindung von Wandelementen und Trägerelementen in die Fügestellenverteilung eingebunden werden kann. Mit strichpunktierten Linien dargestellt sind ein Mittelbodenblech 7 und ein Heckbodenblech 8, die zum einen an einem Längsträger 9 und zum anderen an einem hinteren Querträger 10 befestigt werden. Die Trägerelemente sind hier ebenfalls aus Schalen zusammengesetzt und weisen abgestellte Flansche auf, die einerseits die Verbindung der Schalen untereinander ermöglicht und andererseits auch eine Anlagefläche für die Wandelemente 7, 8 bereitstellt. Insbesondere durch die Laserschweißtechnik können mit einseitiger Zugänglichkeit auch mehrere Lagen durchgeschweißt werden, so daß jeweils eine gegenseitige Verbindung sämtlicher Blechsegmente möglich ist.

Das Ausführungsbeispiel in Figur 5 zeigt Fügestellen 2, die hier durch Kombination von Laserschweißung und Klebung erzeugt worden sind. Diese Form der Verbindung ist insbesondere gegenüber mehrachsig wirkenden Beanspruchungen sehr wirkungsvoll.

An dieser Stelle wird ausdrücklich darauf hingewiesen, daß die einzelnen Trägerelemente nicht notwendigerweise durch Schalen hergestellt sein müssen, sondern auch durch Rollumformung oder Hydroformtechnik vorgefertigte Profilelemente sein können. Auch die einzelnen Knoten können als eigenständige Formteile vorgefertigt sein. Der Steifigkeitsgewinn wird dann erzielt durch die Anbindung von Wandelementen an den Knotenstücken mittels der linien- oder flächenförmig ausgebildeten Fügestellen.

Hervorzuheben ist auch, daß durch die Verteilung der Fügestellen insbesondere die Torsionseigenfrequenz der gesamten Rohkarosserie deutlich verändert werden kann. Damit eröffnet die Anwendung der Erfindung auf konventionell gefertigte Karosseriekörper die Möglichkeit, gegebenenfalls vorhandene Akustikprobleme auch dadurch zu beheben, daß beispielsweise die Torsionseigenfrequenz gezielt verschoben wird.

## Patentansprüche

1. Karosseriekörper (1) für ein Fahrzeug mit Trägerelementen und/oder Wandelementen, die unter Anwendung einer Fügetechnik aus geformten Blechsegmenten zusammengesetzt sind, wobei die Fügestellen (2, 3) im Bereich von Knoten- oder Winkelprofilen im wesentlichen linien- oder flächenförmig und außerhalb dieser Bereiche in Reihenanordnung im wesentlichen punktförmig ausgebildet sind, **dadurch gekennzeichnet,** daß die linien- oder flächenförmig ausgebildeten Fügestellen (2) durch das Schweißen mit einem Strahl hoher Energiedichte und durch Klebung erzeugt sind.

2. Karosseriekörper nach Anspruch 1, **dadurch gekennzeichnet,** daß die punktförmigen Fügestellen (3) durch Widerstandspunktschweißung erzeugt sind.

3. Karosseriekörper nach Anspruch 1 oder 2, **dadurch gekennzeichnet,** daß wenigstens eines der Knotenprofile durch aufeinanderzulaufende Trägerelemente gebildet ist.

4. Karosseriekörper nach Anspruch 3, **dadurch gekennzeichnet,** daß wenigstens eines der Wandelemente an den Trägerelementen im Bereich des Knoten- oder Winkelprofils mittels der linien- oder flächenförmigen Fügestelle (2) gehalten wird.

5. Karosseriekörper nach einem der Ansprüche 1 bis 4, **dadurch gekennzeichnet,** daß wenigstens eines der Wandelemente aus wenigstens einer Innenschale (5) und einer Außenschale (6) zusammengesetzt ist und wenigstens eine im wesentlichen polygonförmige Öffnung aufweist, bei der den die Winkelprofile erzeugenden Ecken die linien- oder flächenförmig ausgebildeten Fügestellen (2) zugeordnet sind.

6. Karosseriekörper nach Anspruch 5, **dadurch gekennzeichnet,** daß die Öffnung zur Aufnahme eines Fensterscheibenelementes hergerichtet ist.

7. Karosseriekörper nach Anspruch 5, **dadurch gekennzeichnet,** daß die Öffnung zur Aufnahme einer Tür, einer Heckklappe, einer Motorhaube, einer Kofferraumhaube oder eines ähnlich ausgeführten Deckels hergerichtet ist.

8. Karosseriekörper nach Anspruch 6 oder 7, **dadurch gekennzeichnet,** daß die Längenausdehnung der linien- oder flächenförmigen Fügestellen zwischen 10 und 50 % vom jeweiligen Betrag der Umfangslänge der Öffnung einnimmt.

## Claims

1. Car body (1) for a vehicle comprising support members and/or wall members, which are joined together using a joining technique which involves shaped metal segments, wherein the join sites (2, 3) are formed in the region of bend or angled profiles in a substantially linear or two-dimensional shape and outside these regions in a row arrangement of spot shapes, characterised in that the linear or two-dimensional-shaped join sites (2) are produced by welding using a beam of high energy density and by means of adhesion.

2. Car body according to claim 1, characterised in that the spot-shaped join sites (3) are produced by resistance spot welding.

3. Car body according to claim 1 or 2, characterised in that at least one of the bend profiles is formed by support elements converging together.

4. Car body according to claim 3, characterised in that at least one of the wall elements is held on the support members in the region of the bend or angled profiles by means of the linear or two-dimensional-shaped join site (2).

5. Car body according to any one of claims 1 to 4, characterised in that at least one of the wall members is formed from at least one inner shell (5) and an outer shell (6) and comprises at least one substantially polygon-shaped orifice and the linear or two-dimensional-shaped join sites (2) are allocated to the comers which produce the angled profiles.

6. Car body according to claim 5, characterised in that the orifice is produced to receive a windscreen element.

7. Car body according to claim 5, characterised in that the orifice is produced to receive a door, a tail-gate, an engine bonnet, a boot lid or a similarly designed lid.

8. Car body according to claim 6 or 7, characterised in that the longitudinal extension of the linear or two-dimensional-shaped join sites amounts to between 10 and 50% of the respective amount of the peripheral length of the orifice.

## Revendications

1. Corps de carrosserie (1) pour un véhicule, comprenant des éléments porteurs et/ou des éléments de paroi assemblés en mettant en oeuvre une technique d'assemblage à partir de segments de tôle mis en forme, les joints d'assemblage (2, 3) étant essentiellement linéaires ou planiformes au niveau de profilés nodaux ou de profilés d'angle, et étant essentiellement constitués sous forme de points alignés en dehors de ces zones, caractérisé en ce que les joints d'assemblage (2) de configuration linéaire ou planiforme sont créés par soudage à l'aide d'un rayon de haute densité d'énergie et par collage.

2. Corps de carrosserie selon la revendication 1, caractérisé en ce que les joints d'assemblage ponctuels (3) sont créés par soudage par points par résistance.

3. Corps de carrosserie selon la revendication 1 ou 2, caractérisé en ce que l'un au moins des profilés nodaux est constitué d'éléments porteurs qui se rejoignent.

4. Corps de carrosserie selon la revendication 3, caractérisé en ce que l'un au moins des éléments de paroi est maintenu sur les éléments porteurs, au niveau du profilé nodal ou du profilé d'angle, par l'intermédiaire du joint d'assemblage linéaire ou planiforme (2).

5. Corps de carrosserie selon l'une des revendications 1 à 4, caractérisé en ce que l'un au moins des éléments de paroi est constitué d'au moins une moulure intérieure (5) et d'une moulure extérieure (6), et comporte au moins une ouverture essentiellement polygonale, où les joints d'assemblage (2) de forme linéaire ou planiformes sont associés aux coins définissant les profilés d'angle.

6. Corps de carrosserie selon la revendication 5, caractérisé en ce que l'ouverture est aménagée pour accueillir un élément de vitre.

7. Corps de carrosserie selon la revendication 5, caractérisé en ce que l'ouverture est aménagée pour accueillir une portière, un hayon, un capot moteur, un couvercle de coffre ou un autre couvercle réalisé de façon similaire.

8. Corps de carrosserie selon la revendication 6 ou 7, caractérisé en ce que l'étendue longitudinale des joints d'assemblage linéaires ou planiformes occupe entre 10 et 50 % de la valeur correspondante de la longueur circonférentielle de l'ouverture.
